# EUROPEAN PATENT APPLICATION

(11) **EP 2 584 679 A2**
(43) Date of publication of application: **24.04.2013**
(21) Application number: 12188999.2
(22) Date of filing: 18.10.2012
(51) Int. Cl.: H02K 13/00

(54) **Abnormal brush wear diagnostic device and rotary electric machine using the same**

(30) Priority: 18.10.2011 JP 2011228430
(71) Applicant: Hitachi Ltd., Tokyo 100-8280 (JP)
(72) Inventor: Yanagita, Norihito, Tokyo, 100-8220 (JP); Kato, Tatsuro, Tokyo, 100-8220 (JP); Iwata, Takeshi, Tokyo, 100-8220 (JP)
(74) Representative: Beetz & Partner

(57) **Abstract**

The present invention is intended to provide an abnormal wear diagnostic device (12) to detect an abnormal wear that is occurring in an early stage of an operation life of the rotary electric machine to improve an operation life of an electric sliding contact mechanism. The rotary electric machine of the present invention detects pulse signals of small discharges occurring at a sliding interface between a brush (2) and a slip ring (1) and comprises an abnormal wear diagnostic device (12) to make a histogram between the pulse height and the frequency count of the pulse height, compare this histogram with a threshold function of the pulse height and the frequency count issues an warning for the abnormal wear if the histogram is out of the threshold function.

## Description

### Background of Invention

### Technical Field

The present invention is related to an abnormal wear detection device to detect an early stage abnormal wear happening to such a typical sliding electric conduction device as a combination of a slip ring and a brush which are used for an electric generator or an electric motor.

### Description of Related Art

An electric sliding contact mechanism, as it is called, in which a couple of different electrical parts slide on each other while an electrical current flow through between the electrical parts which are kept in contact with each other, is applied to various products among which a combination of a pantograph and trolley lines for railway and a combination of a brush and a slip ring for a rotary electric machine are typical. Since the couple of electrical parts used for the sliding contactslide conduction mechanism gradually wear, it is necessary to keep on maintenance work to check and replace the couple of electrical parts. However the wear speed of the couple of electrical parts varies depending on an environmental condition around the couple of electrical parts and a load applied to the couple of electrical parts. For example, the wear speed of the couple of electrical parts varies depending on the electrical current flowing through between them and if a couple of electrical parts is not checked for a long period, there is a risk that such a serious accident as electric sliding contact mechanism of the couple electrical parts stops functioning occurs. Therefore there have been technical solutions proposed to monitor a wear condition of electrical parts.

Japanese published unexamined application No. 2007-189757A is known as a prior art technology in this technology field. JP2007-189757A discloses a wear detection mechanism in which an output voltage of a detection circuit is dependent on a resistance of a variable resistor which varies in response to a turning action of a brush pressing metal member applying a pressing force onto a brush and varies as a brush is wearing and the wear condition of the brush is monitored online through the output voltage.

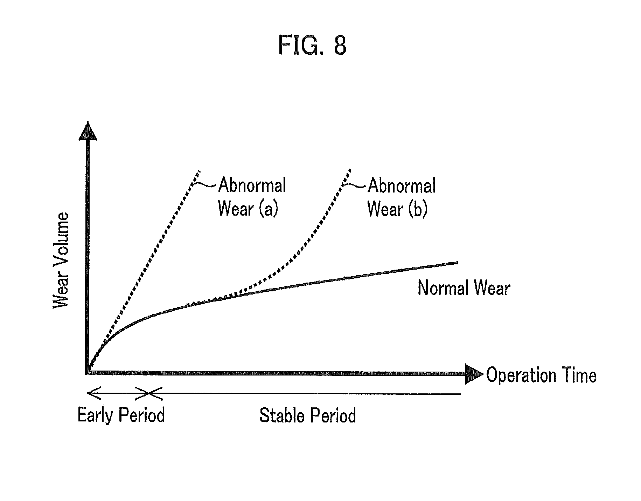

Fig.8 shows a typical wear progress process of a brush. In general, the wear speed of the brush is higher during an early period after a rotary electric machine starts to operate and becomes gradually lower to a normal wear speed as the rotary electric machine continues to operate, as is shown in Fig.8. However, if the rotary electric machine starts to operate in a severe environment such as extremely high humidity or temperature atmosphere or extremely dust-laden atmosphere or the operation condition changes to the severe environment, the wear sped of the brush becomes high quickly, as indicated by abnormal wear cases (a) and (b) in Fig.8. A main cause for this abnormal wear occurring is lubricity on the surface of the brush being lost due to the surface of the slip ring being damaged and roughened from electric erosion on the surface of the slip ring which is caused by a discharge that occurs at the interface between the brush and the slip ring. Once the surface of the slip ring becomes roughened, the discharge at the interface occurs more frequently, which results in further surface deterioration of the slip ring, the wear of the surface of the brush being accelerated and the abnormal wear progressing further. When this abnormal wear occurs, a rotating part like the slip ring is not easily replaced while the brush is easily replaced. If the slip ring is not replaced and the brush is replaced, the rotary electric machine restarts to operate with the surface of the slip ring roughened, the abnormal wear is likely to occur and the operation life of the rotary electric machine inevitably becomes shorter. Since the surface wear is monitored with the slip ring already deteriorated in the method to monitor the wear amount disclosed in JP2007-189757A, it is capable of detecting when the brush is replaced and not capable of making the life of the rotary electric machine longer and reducing the maintenance work.

The present invention has been made to solve the above mentioned problem and is intended to provide an abnormal wear diagnostic device to detect an abnormal wear occurring earlier to make an operation life of the electric sliding contact mechanism longer.

### Summary of Invention

In order to achieve the above mentioned objective, a rotary electric machine of the present invention comprises an electric sliding contact mechanism in which a couple of different electrical parts slide on each other while an electrical current is flowing through the couple of different electrical parts, detecting elements to detect a discharge signal of a pulse generated from an interface between the couple of different electrical parts and an abnormal wear diagnosis device for determining an abnormal wear occurring between the couple of different electrical parts. The rotary electric machine of the present invention includes such detecting elements as capable of detecting electro-magnetic wave, light, acoustic wave and pulse current. The abnormal wear diagnostic device receives pulse heights of the discharge signals and detection frequency data on the pulse height, makes a histogram between the pulse height and the frequency data, compares the histogram with a threshold function of the pulse height and the frequency of the pulse height and issues a warning for the abnormal wear occurring if the histogram is out of the threshold function. To be specific, the rotary electric machine of the present invention includes any of an antenna to detect electro-magnetic wave, a photoelectric conversion element to detect emitted light and an acoustic measurement element which are disposed in the vicinity of the electric sliding contact mechanism, and a current meter connected with an electric conduction wire. The abnormal wear diagnostic device receives from any of the detecting elements pulse heights of the discharge signals and detection frequency data on the pulse height, makes a histogram between the pulse height and the frequency data, compares the histogram with a threshold function of the pulse height that is determined in advance, determines whether the normal wear or the abnormal wear is occurring and issues a warning if it determines that the abnormal wear is occurring.

According to the present invention, abnormal wear in an early stage can be detected, which contributes to preventing sliding electric contact components from deteriorating in an early stage after the rotary electric machine starts its operation. As a result, the operation life of the electric sliding contact mechanism in the rotary electric machine becomes longer although maintenance work for the electric sliding contact mechanism is reduced.

### Brief Description of Drawings

Fig.1 shows a schematic configuration for the first example of the present invention.
Fig.2 is a figure explaining in detail an internal process flow in an abnormal wear diagnostic device 12 of the present invention.
Fig.3 shows a schematic configuration for the second example of the present invention.
Fig.4 shows a schematic configuration for the third example of the present invention.
Fig.5 shows a schematic configuration for the fourth example of the present invention.
Fig.6 shows a schematic configuration for the fifth example of the present invention.
Fig.7 is a time chart explaining an internal process flow in a real time judgment circuit 20 in the fifth example.
Fig.8 shows a typical wear progress process of a brush.

### DETAILED DESCRIPTION OF EMBODIMENTS

Hereinafter are explained examples of the present inventions with reference to the drawings.

### (First Example)

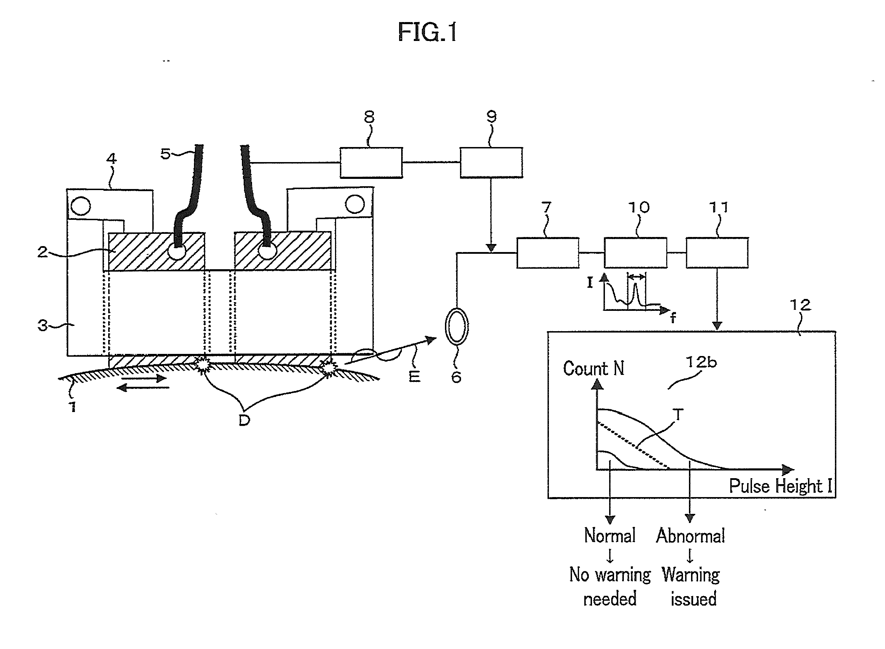

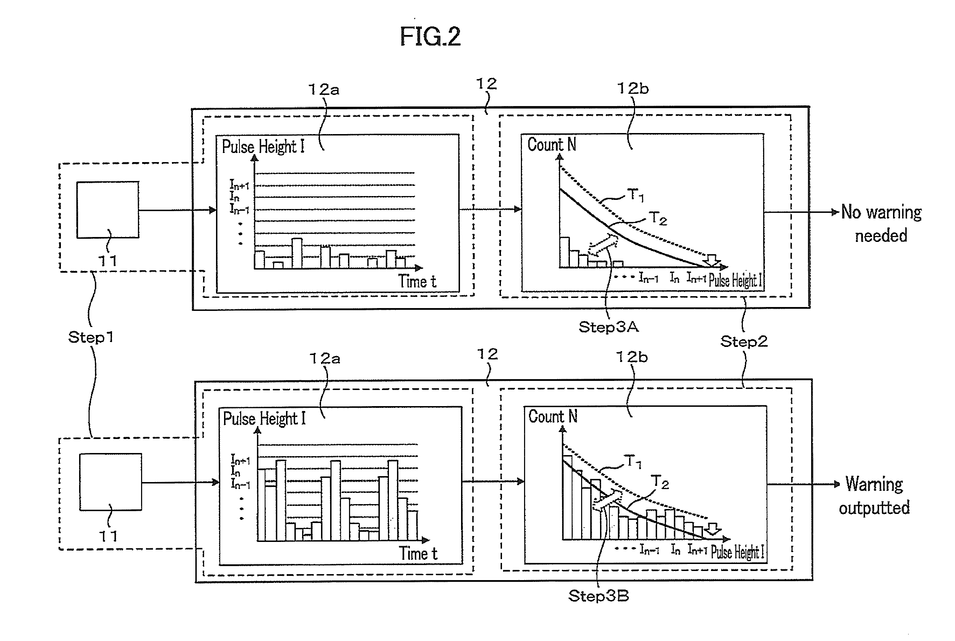

The first example of a rotary electric machine having an abnormal wear diagnostic device is explained in detail with reference to Fig.1 and Fig.2.

Fig.1 shows a schematic configuration for the first example of the present invention. This present example is explained using a combination of different electrical parts of a slip ring 1 and a brush 2. It should be noted that the present example is applied to such other combinations of different electrical parts used in other technical field as a combination of a pantograph and trolley lines for railway and a combination of a static contact and a movable contact for a switch-gear. Fig. 1 shows a couple of brushes 2 sliding on a slip ring 1 while an electrical current keep on flowing through the electric contact between the brushes 2 and the slip ring 1. The brushes 2 are supported by a brush holder 3 to have the brushes 2 keep on pressing against the slip ring 1 and an electrical current flow through a lead wire 5 to the outside. While the rotary electric machine is in operation, a small discharge D intermittently occurs at an interface between the brush 2 and the slip ring 1, especially at a corner of the brush 2, because the brush 2 to be kept in electric contact with the slip ring 1 intermittently comes out of contact with the slip ring 1. When the small discharge D occurs, an electro-magnetic wave generated from the electro-magnetic discharge D is radiated. This small discharge D hardly occurs when the brush 2 is kept stably in electric contact with the slip ring 1 and frequently occurs as the surface of the slip ring 1 is so severely roughened that the brush 2 is not kept in uniform contact with the slip ring 1. In the rotary electric machine of the present example, a loop antenna 6, which is an electro-magnetic wave detection element to detect an electro-magnetic wave E, is attached in the vicinity of the interface between the brush 2 and the slip ring 1. A signal of the detected electro-magnetic wave is amplified through an amplifier 7. If the alternating electrical current flows through the interface between the brush 2 and the slip ring 1, a phase gate 9 is used to detect electro-magnetic waves only around the current phases of 90 and 270 degrees by measuring the current wave form of the current flowing through the lead wire 5 with a current meter 8 in order to improve the measurement reliability by reducing the possibilities of making an erroneous determination, because no discharge occurs when the current flowing through the interface is zero. The amplified electro-magnetic wave signal is filtered through a band-pass filter 10 to collect only a predetermined frequency signal which is a frequency signal of the electro-magnetic wave E between several hundred MHz and several GHz which is generated by the small discharge D. A pulse height of the filtered signal of the electro-magnetic wave E is converted through an A/D converter 11 to a digital value. The digital value signal is inputted to the abnormal wear diagnostic device 12. The abnormal wear diagnostic device 12 receives and internally counts the digital value signals which are inputted intermittently, makes a histogram of the digital value signals and issue a warning when a bas exceeds a threshold value.

The abnormal wear occurring results from unstable contact of the brush 2 with the slip ring 1 due to a problem with a sliding part support member (brush holder 3 in Fig.1) or worsening of the surrounding environment such as extremely high humidity or temperature atmosphere or extremely dust-laden atmosphere, as is already explained. When small discharges D such as arc discharges occur at the contact interface between sliding parts due to any of these causes, the surface of the sliding part is damaged and roughened due to the heat effect of the small discharge D. Once the surface of the sliding part is damaged and roughened, the small discharge D occurs more frequently due to the roughened surface of the sliding part. Then the small discharge D and the surface damage of the sliding part repeatedly occur, which results in the abnormal wear on the surface of the sliding part. Accordingly, since the small discharge D is a precursor phenomenon to be a predictive sign for the abnormal wear, it is preferable to detect the small discharge D early with the electro-magnetic wave detection element as is shown in the present example to prevent the abnormal wear.

Next, an internal process flow in the abnormal wear diagnostic device 12, which is shown in Fig.2, is explained according to the following three steps. In this explanation, Case A (no warning needed) indicates a normal wear and case B (warning issued) indicates an abnormal wear.

### Step 1:

The pulse height values of the pulse signals which are •••, Iₙ₋₁, Iₙ, Iₙ₊₁, •••, and sequentially inputted from the A/D converter 11 are sampled and stored by a sampling section 12a.

### Step 2:

A histogram of pulse count numbers N of the pulse height values with respect to the pulse height value I is made by a pulse height/count number histogram section 12b.

### Step 3:

A threshold curve T is drawn in the histogram made in Step 2. According to a relation between the histogram and the threshold curve T, there are a couple of steps, one, Step 3A, for Case A (Normal Wear) and the other, Step 3B, for Case B (Abnormal Wear), each of which is taken according to a relation between the histogram and the threshold curve T. Each step is explained as follows.

### Step 3A

When the pulse heights of the bars in the histogram are lower and the bars in the histogram for the count numbers are lower as is the case with Case A, the histogram is made in a range near the origin point in the pulse height/count number histogram section 12b. If the histogram is on the left and lower side of the threshold curve T that is predetermined, the abnormal wear diagnosis device determines that the normal wear occurs and allows the rotary electric machine to continue to be in operation.

### Step 3B

When the pulse heights of the bars in the histogram are higher and the bars in the histogram for the count numbers are higher as is the case with Case B, the histogram becomes larger both in the horizontal and vertical directions in the pulse height/count number histogram section 12b. If the histogram is on the right and upper side of the threshold curve T, the abnormal wear diagnosis device determines that the abnormal wear occurs and issues a warning.

The threshold curve T as a function of the pulse height and the count number is used in the present example. Instead of using the threshold curve, a warning may be issued when the pulse height becomes higher than a predetermined pulse height value regardless of the count number. However, the wear condition can be erroneously determined in the following cases in which small discharges occur. There can be a case in which such small discharges D as generating pulses with low pulse heights frequently occur, and there can be a case in which such small discharges D as generating pulses with high pulse heights occasionally occurs. The abnormal wear diagnostic device which makes use of a threshold curve considering these cases is capable of accurately determining an abnormal wear occurring in the rotary electric machine without avoiding an erroneous determination. In an early operation period when a new rotary electric machine starts to operate, the contact face of the brush 2 does not so sufficiently fit the slip ring 1 that the brush 2 does not smoothly slide on the slip ring 1 and that small discharge D is more likely to occur than in a stable operation period when the contact face of the brush 2 fits well the slip ring 1. Therefore the abnormal wear diagnostic device is capable of more accurately determining an abnormal wear occurring in the rotary electric machine if the threshold curve T is made as a function of the operation time for the rotary electric machine being in operation with a threshold curve T₁ used for the early operation period of the rotary electric machine and a threshold curve T₂ used for the stable operation period.

The abnormal wear diagnostic device in the present example detects signals of the electro-magnetic wave E which is radiated from the small discharge D. Since the detected signals have frequencies between several hundred MHz and several GHz, which are so high as to be easily separated from the background noise, the abnormal wear diagnostic device in the present example is capable of accurately determining the abnormal wear.

### (Second Example)

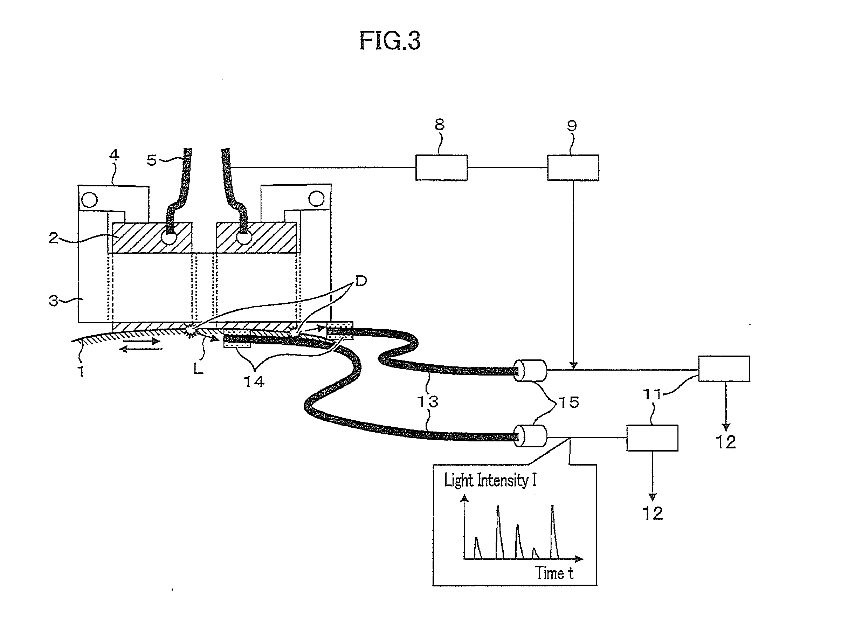

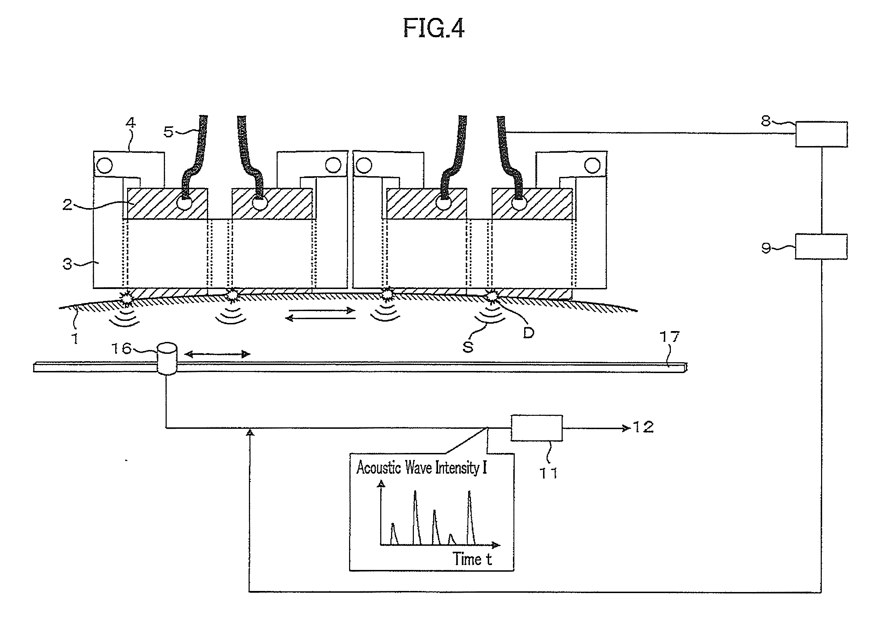

The second example to be explained is related to a rotary electric machine including an abnormal wear diagnostic device using electric discharge emitted light as a physical signal to be detected. Fig.3 shows a schematic configuration of a rotary electric machine including an abnormal wear diagnostic device for the second example of the present invention. An explanation is omitted on the internal process flow in the abnormal wear diagnostic device 12 after the A/D converter 11 in Fig.4, which is the same as the process flow in Fig.1 and Fig.2 already explained.

While the rotary electric machine is in operation, a small discharge D intermittently occurs at an interface between the brush 2 and the slip ring 1, especially at a corner of the brush 2, because the brush 2 to be kept in electric contact with the slip ring 1 intermittently comes out of contact with the slip ring 1. When the small discharge D occurs, an electric discharge emitted light L generated from the electro-magnetic discharge D is radiated. In the rotary electric machine of the present example, an optical fiber 13 is disposed in the vicinity of the interface between the brush 2 and the slip ring 1. There is a particle prevention cap 14 attached to an end of the optical fiber 13 on the light source side to prevent particles from being attached onto a light receiving face of the optical fiber 13. There is a photomultiplier tube 15 which is a light detecting element and attached to the other end of the optical fiber 13. The electric discharge emitted light L is photoelectrically converted through the photomultiplier tube 15 to an electrical pulse signal, which is intermittently transmitted to the A/D converter 11 and converted to a digital value to be inputted to the abnormal wear diagnosis device 12.

### (Third Example)

The third example to be explained is related to a rotary electric machine including an abnormal wear diagnostic device using acoustic wave as a physical signal to be detected. Fig.4 shows a schematic configuration of a rotary electric machine including an abnormal wear diagnostic device for the third example of the present invention. An explanation is omitted on the internal process flow in the abnormal wear diagnostic device 12 after the A/D converter 11 in Fig.4, which is the same as the process flow in Fig.1 and Fig.2 already explained.

While the rotary electric machine is in operation, a small discharge D intermittently occurs at an interface between the brush 2 and the slip ring 1 and an acoustic wave S is generated. In the rotary electric machine of the present example, an acoustic sensor 16 as an acoustic wave detecting element, for which an AE (Acoustic Emission) sensor is typical, is attached in the vicinity of the interface between the brush 2 and the slip ring 1. This acoustic sensor 16 is mounted on a running rail 17 and runs along the interface. While running, the acoustic sensor 16 detects an acoustic wave S which is converted to an electrical signal. The converted electrical signal is an electrical pulse signal and intermittently transmitted to an A/D converter 11 through which a height of the pulse signal is converted to a digital value to be inputted to the abnormal wear diagnostic device 12.

In general, the acoustic wave attenuates quicker than the electro-magnetic wave and the light as it travels in the atmosphere. Therefore a position at which a discharge occurs is accurately identified by having the acoustic sensor 16 run along the interface and scanning the interface. For example, if the rotary electric machine has a structure in which there are so many brushes used that it is difficult to replace all the brushes, this detection system enables selecting brushes to be replaced and reduces operation work for the replacement. A similar effect to what is mentioned above is obtained if a plurality of acoustic sensors 16 are arranged appropriately instead of having the acoustic sensor 16 run along the interface.

### (Fourth Example)

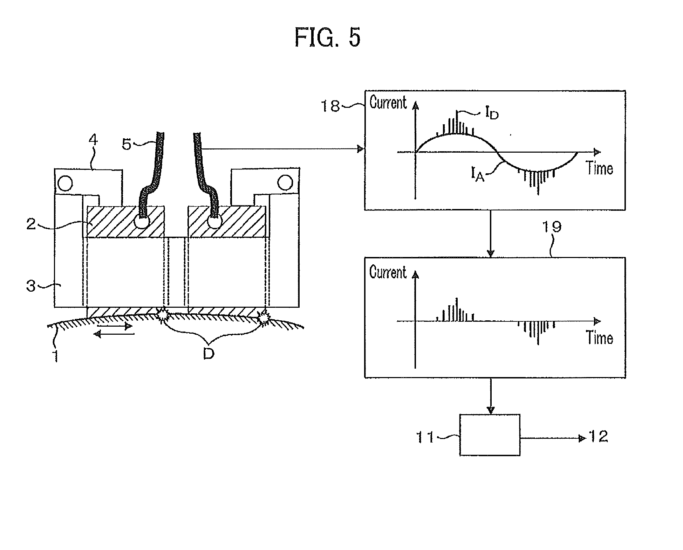

The fourth example to be explained is related to a rotary electric machine including an abnormal wear diagnostic device using a current wave form as a physical signal to be detected. Fig. 5 shows a schematic configuration of a rotary electric machine including an abnormal wear diagnostic device for the fourth example of the present invention. An explanation is omitted on the internal process flow in the abnormal wear diagnostic device 12 after the A/D converter 11 in Fig.5, which is the same as the process flow in Fig.1 and Fig.2 already explained.

When a small discharge D occurs, a discharge current I_{D} in a pulse wave form in addition to a normal current I_{A} (alternating current in this example) flows through a lead wire 5. Only a component for the discharge current I_{D} is extracted after filtering out a component for the normal current I_{A} from an output on the current meter 18 through a band pass filter 19. A pulse height of the component of the discharge current I_{D} is converted to a digital value to be inputted to the abnormal wear diagnostic device 12.

The present example is realized only by connecting the lead wire 5 with the current meter 18 and the band pass filter 19, which have not be disposed in the vicinity of the rotary electric machine. Accordingly the abnormal wear diagnostic device may be disposed any position and is easily installed. The installation cost is relatively low.

### (Fifth Example)

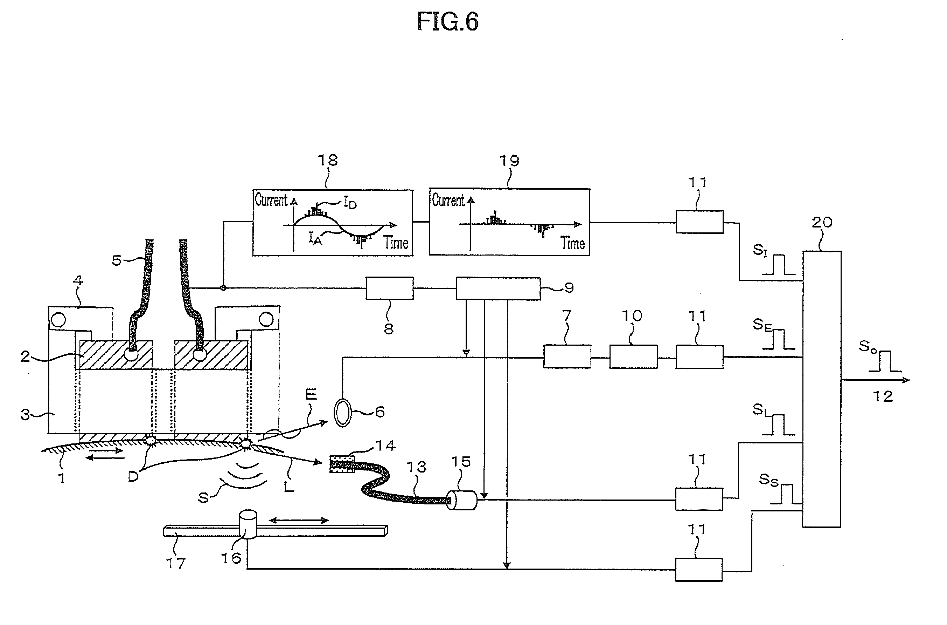

The fifth example to be explained is related to a rotary electric machine including an abnormal wear diagnostic device using all of an electro-magnetic wave detecting element (loop antenna 6), a light detecting element (photomultiplier tube 15), an acoustic wave detecting element (acoustic sensor 16), a current meter 18. Fig.6 shows a schematic configuration of a rotary electric machine including an abnormal wear diagnostic device for the fifth example of the present invention. Discharge detection signals S_{I}, S_{E}, S_{L} and Ss, each of which is of a pulse, generated from one of the loop antenna 6, the photomultiplier tube 15 the acoustic sensor 16 and the current meter 18 and comes through an A/D converter 11, are inputted to a coincidence judgment circuit 20. The loop antenna 6, the photomultiplier tube 15 and the acoustic sensor 16 are disposed in the vicinity of an interface between the brush 2 and the slip ring 1, and the current meter 18 is connected with a lead wire 5. In this example a main signal is selected from among the discharge detection signals S_{I}, S_{E}, S_{L} and Ss and a time gate is opened for a predetermined time on the main signal being inputted. If any of the other signals than the main signal is inputted while the time gate is kept opened, the coincidence judgment circuit 20 outputs to the abnormal wear diagnosis device 12 a signal So which corresponds to the pulse height of the main signal.

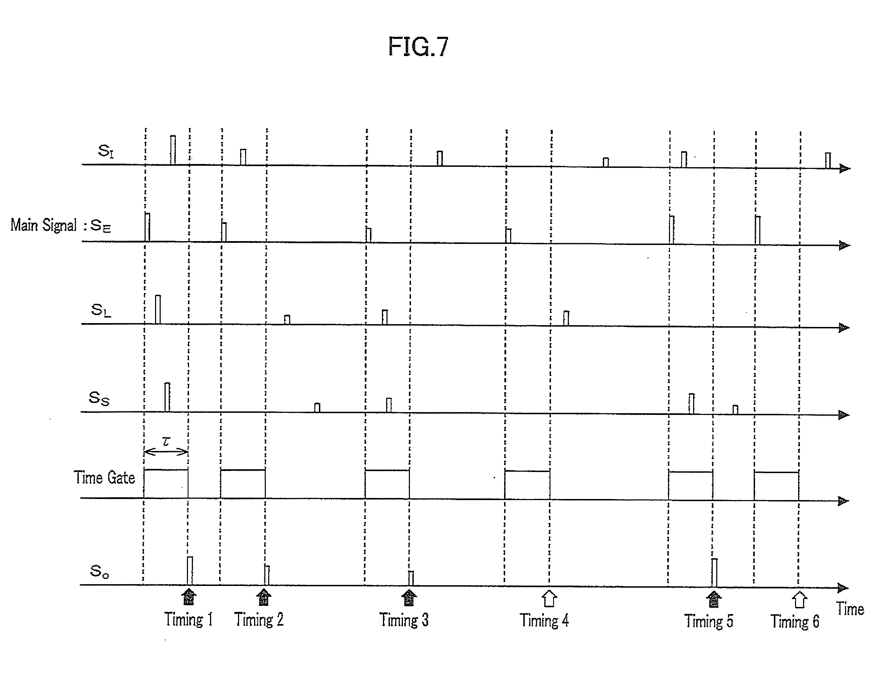

Next, an internal process flow of the coincidence judgment circuit 20 is explained in detail with reference to a time chart in Fig.7. In this time chart, the detection signal S_{E} from the electro-magnetic wave detecting element is designated as the main signal and a time for the time gate being open is denoted by τ. The process to be carried out at each of Timings 1 to 6 after the main signal S_{E} is inputted and the time τ elapses.
Timing 1 : So is outputted because S_{I}, S_{L} and Ss are inputted during the time gate τ
Timing 2 : So is outputted because S_{I} is inputted during the time gate τ
Timing 3 : So is outputted because S_{L} and Ss are inputted during the time gate τ
Timing 4 : So is not outputted because no signal is inputted during the time gate τ
Timing 5 : So is outputted because S_{I} and Ss are inputted during the time gate τ
Timing 6 : So is not outputted because no signal is inputted during the time gate τ

In this example, the coincidence judgment circuit 20 is used and outputs a pulse height signal to the abnormal wear diagnostic device 12 if any of the other signals is inputted during the time gate for the main signal. As a result, accidentally generated erroneous signals are not outputted to the abnormal wear diagnosis device, which contributes to improving an S/N ratio, making a more accurate histogram and improving reliability for determining abnormal wear.

## Claims

1. An abnormal wear diagnosis device (12) used for a mechanism in which a couple of different electrical parts slide on each other while an electrical current is flowing through the couple of different electrical parts,
the abnormal wear diagnosis device (12) receiving a discharge signal (E) of a pulse which is generated from an interface between the couple of different electrical parts and detected by a detector (6), making a histogram of a count number of a pulse height of the discharge signal with respect to the pulse height, comparing the histogram with a threshold function of the pulse height and the count number and issuing a warning for an abnormal wear occurring between the couple of different electrical parts if the histogram is out of the threshold function.

2. The abnormal wear diagnosis device (12) as described in claim 1, wherein the detector for detecting the discharge signal is an electro-magnetic wave detecting element (6).

3. The abnormal wear diagnosis device (12) as described in claim 1, wherein the detector for detecting the discharge signal is a light detecting element (13, 14, 15).

4. The abnormal wear diagnosis device (12) as described in claim 1, wherein the detector for detecting the discharge signal is an acoustic wave detecting element (16).

5. The abnormal wear diagnosis device (12) as described in claim 4, wherein the detector includes a mechanism (17) for scanning an area around a source of a discharge occurring while the detector (16) is detecting the discharge signal.

6. The abnormal wear diagnosis device (12) as described in claim 1, wherein the detector for detecting the discharge signal (I_{D}) is a current meter (18) detecting a pulse like current component to be added to a normal current flowing through the couple of different electrical parts.

7. The abnormal wear diagnosis device (12) as described in claim 6, further comprising a phase gate (19) enabling detecting the discharge signal only during a predetermined phase.

8. The abnormal wear diagnosis device (12) as described in claim 1 comprising a coincidence judgment circuit (20), receiving the discharge signals from at least two detectors of an electro-magnetic wave detecting element (6), a light detecting element (13, 14, 15), an acoustic wave detecting element (16) and a current meter (18) are simultaneously with one of the discharge signals from at least two detectors being designated as a main signal and having the coincidence judgment circuit (20) output the main signal for the discharge signal, if the coincidence judgment circuit (20) receives the discharge signal other than the main signal from any of the at least two detectors through a time gate (τ) which opens for a predetermined time on receiving the main signal, while the time gate (τ) is kept opened.

9. A rotary electric machine comprising the abnormal wear diagnosis device (12) as described in any of claims 1 to 8 and the couple of different electrical parts which consist of a current-collecting brush (2) and a slip ring (1).
